# EUROPEAN PATENT APPLICATION

(11) **EP 4 614 659 A1**
(43) Date of publication of application: **10.09.2025**
(21) Application number: 24305347.7
(22) Date of filing: 07.03.2024
(51) Int. Cl.: H01M 10/24, H01M 50/308, H01M 50/342, H01M 50/383, H01M 50/392, H01M 50/30, H01M 50/645, H01M 50/655

(54) **VENTING DEVICE FOR AN ELECTROCHEMICAL CELL, ASSOCIATED ELECTROCHEMICAL CELL AND BATTERY MODULE**

(71) Applicant: Saft Groupe, 92300 Levallois-Perret (FR)
(72) Inventor: KUMM, Henrik, 572 31 OSKARSHAMN (SE); STENANDER, Staffan, 57932 HÖGSBY (SE)
(74) Representative: Lavoix

(57) **Abstract**

The venting device (70) is designed to allow gas generated within a cavity (38) of the electrochemical cell (20) to escape and comprises:
- a base designed to be mounted onto the housing (30) and delimiting a through-hole to be in fluidic communication with the cavity (38);
- a covering piece (90) permanently connected to the base, movable between covering and uncovering positions and comprising:
- a main body (92) delimiting a venting pathway;
- a flame arrestor element.

The covering piece (90) further comprises a pressure control element designed to plug the venting pathway when the gas pressure is lower than a first gas pressure threshold and to allow the passage of the gas through the venting pathway when the gas pressure is greater than the first gas pressure threshold.

## Description

The present invention concerns a venting device for an electrochemical cell, designed to allow gas generated within a cavity defined by a housing of the electrochemical cell to escape the cavity, comprising:
- a base designed to be mounted onto the housing and delimiting a through-hole designed to be in fluidic communication with the cavity;
- a covering piece permanently connected to the base and movable between a covering position in which the covering piece covers the through-hole and an uncovering position in which the covering piece uncovers the through-hole;
the covering piece comprising:
- a main body delimiting a venting pathway in fluidic communication with the through-hole when the covering piece is in the covering position;
- a flame arrestor element mounted on the main body and arranged across the venting pathway.

The invention is applicable in particular to vented cells. A vented cell (also called "open cell") comprises a housing provided with an opening through which products of electrolysis and evaporation are allowed to escape freely from the cell to the atmosphere.

DE 10 2022 108606 A1 discloses such a venting device.

During overcharge of electrochemical cells of the alkaline electrolyte type, water contained in the electrolyte is likely to be dissociated into oxygen and hydrogen gas. To avoid overpressure within the cavity, the venting device allows these gases to escape outside of the cavity.

The dissociation of water into oxygen and hydrogen and the escape of these gases outside of the cavity means that the water level from the electrolyte within the cavity decreases over time. Thus, this kind of cells needs water refilling (or topping up) regularly. For this maintenance operation, access to the cavity is needed.

With a venting device of the prior art, water escapes the cavity at a high rate. This lead to a rapid decrease of the water level within the cavity. Thus, the cavity needs to be replenished with water often. To fill the cavity with water, the venting device needs to be separated from the housing of the electrochemical cell, or at least displaced in an open position to give an operator access to the cavity. This is rather tedious.

One aim of the invention is thus to provide a venting device which makes the need for water filling less frequent while facilitating the water filling for the operator.

For this purpose, the invention concerns a venting device of the aforementioned type, wherein the covering piece further comprises a pressure control element mounted on the main body designed to plug the venting pathway when the gas pressure is lower than a first gas pressure threshold and to allow the passage of the gas through the venting pathway when the gas pressure is greater than the first gas pressure threshold.

Thanks to these features, the pressure control element keeps the venting pathway tight as long as the gas pressure is lower than the first gas pressure threshold. By doing so, the gases within the cavity reach a higher pressure before leaving the cavity. With such a higher pressure, oxygen and hydrogen gases within the cavity are more likely to recombine into water. This considerably slows the escape of water outside of the cavity and thus makes the need for water replenishing less frequent.

Furthermore, since the pressure control element is mounted on the main body, the pressure control element is away from the through-hole of the base when the covering piece is in the uncovering position. This makes the water refilling operation easier, since the operator only has to move the covering piece as a whole into the uncovering position to access the cavity.

The venting device according to the invention may comprise one or more of the following features, taken alone or in any technically feasible combination:
- the main body comprises an inner cylindrical skirt delimiting at least a portion of the venting pathway, the pressure control element covering a longitudinal edge of the inner cylindrical skirt;
- the inner cylindrical skirt comprises at least one radial opening, the pressure control element being designed to cover the at least one radial opening when the gas pressure is lower than the first gas pressure threshold and being able to uncover the at least one radial opening when the gas pressure is greater than the first gas pressure threshold;
- the main body further comprises an outer cylindrical skirt and a radial flange radially connecting the outer cylindrical skirt and the inner cylindrical skirt, the radial flange bearing against the base when the covering piece is in the covering position;
- the outer cylindrical skirt and the radial flange define a support for the flame arrestor element;
- the pressure control element is an elastically deformable cap;
- the elastically deformable cap is made up of a material having a hardness between 30 shore A and 80 shore A, said material being for example rubber;
- the first gas pressure threshold is between 20 mbar and 100 mbar;
- the covering piece further comprises a degassing valve, the degassing valve being designed to allow gas generated within the cavity to escape the cavity if the covering piece is in the covering position and if the gas pressure is greater than a second gas pressure threshold, the second gas pressure threshold being greater than the first gas pressure threshold;
- the second gas pressure threshold is between 300 mbar and 600 mbar;
- the covering piece further comprises a cap mounted on the main body and covering the flame arrestor element, the cap delimiting at least one venting hole;
- the venting device further comprises a connection mechanism configured for permanently connecting the covering piece to the base and configured for allowing movement of the covering piece between the covering position and the uncovering position;
- the connection mechanism comprises a hinge, the covering piece being rotatably movable between the covering position and the uncovering position around an articulation axis of the hinge.

The invention also concerns an electrochemical cell comprising:
- a housing defining a cavity;
- an electrochemical bundle arranged within the cavity and comprising at least one electrochemical assembly comprising a positive electrode, a negative electrode and a separator interposed between the positive electrode and the negative electrode;
- a volume of electrolyte arranged within the cavity, in which the at least one electrochemical assembly is at least partially immersed;
- at least a venting device as described above, being designed to allow gas generated within the cavity to escape the cavity,

the base of the at least one venting device being mounted onto the housing and delimiting a through-hole in fluidic communication with the cavity,
the pressure control element of the at least one venting device plugging the venting pathway when the gas pressure is lower than the first gas pressure threshold and allowing the passage of gas through the venting pathway when the gas pressure is greater than the first gas pressure threshold.

The invention also concerns a battery module comprising at least one electrochemical cell as described above.

The invention will be better understood upon reading the following description, given only as an example and made with reference to the appended drawings, in which:
- Figure 1 is a schematic illustration of a battery module according to the invention;
- Figure 2 is a cross-sectional view of an electrochemical cell comprised in the battery module of figure 1;
- Figure 3 is a perspective view of a venting device of the electrochemical cell of figure 2;
- Figure 4 is an exploded perspective view of the venting device of figure 3;
- Figure 5 is a cross-sectional view of the venting device of figure 3 according to section V-V visible on figure 3.

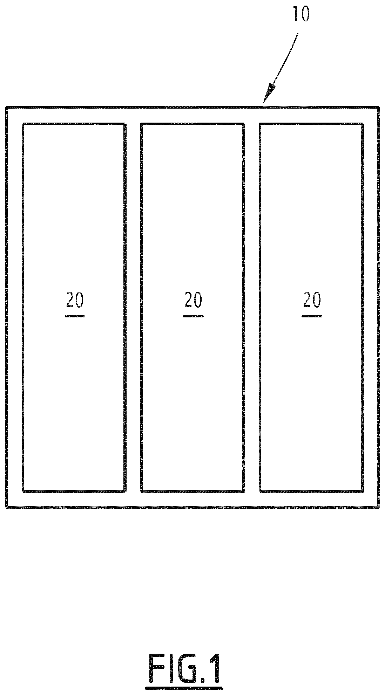

A battery module 10 according to the invention is shown on figure 1.

The battery module 10 comprises at least an electrochemical cell 20.

As shown on the example of figure 1, the battery module 10 comprises a plurality of electrochemical cells 20.

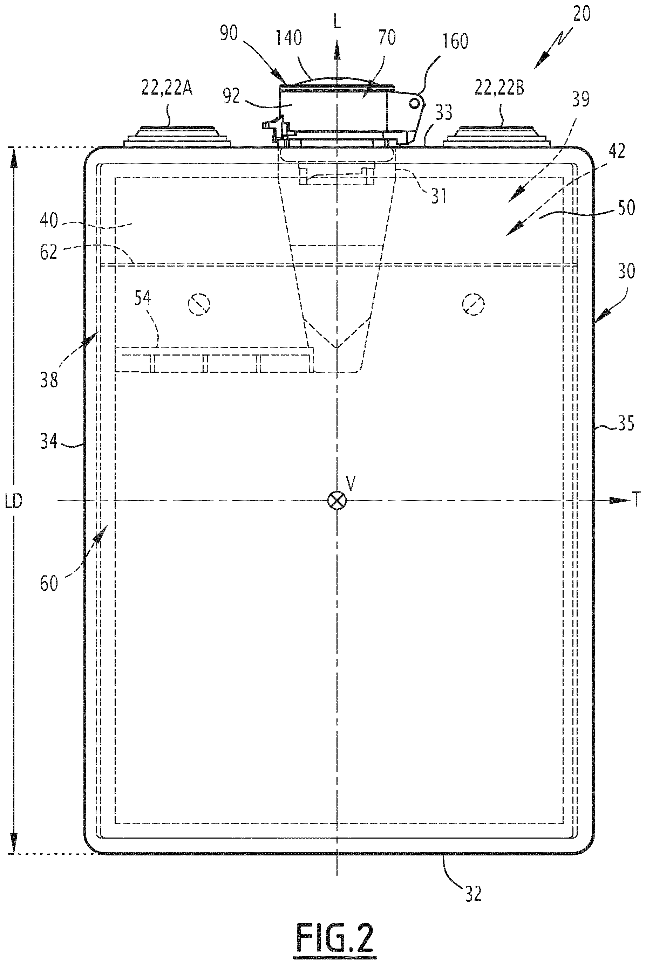

Further below, an electrochemical cell 20 according to the invention is described, with reference to figure 2. Only one electrochemical cell 20 is described hereinafter. This description applies for example to each and every one of the electrochemical cells of the battery module 10.

The electrochemical cell 20 is configured to store electrical energy and/or generate electrical power at terminals 22.

In the example of figure 2, the electrochemical cell 20 is a prismatic cell. In a variant, the electrochemical cell 20 is a cylindrical cell or a pouch cell.

For instance, the electrochemical cell 20 is a nickel-based cell, for example a nickel-metal hydride cell, a nickel-cadmium cell or a nickel-zinc cell.

In particular, the electrochemical cell 20 is a rechargeable cell (also called "secondary cell").

In view of figure 2, the electrochemical cell 20 comprises:
- a housing 30 ;
- an electrochemical bundle 39 ;
- a volume of electrolyte 60; and
- at least a venting device 70.

In particular, the electrochemical cell 20 further comprises the terminals 22, notably a first terminal 22A (which is for example a positive terminal) and a second terminal 22B (which is for example a negative terminal), which are mounted onto the housing 30.

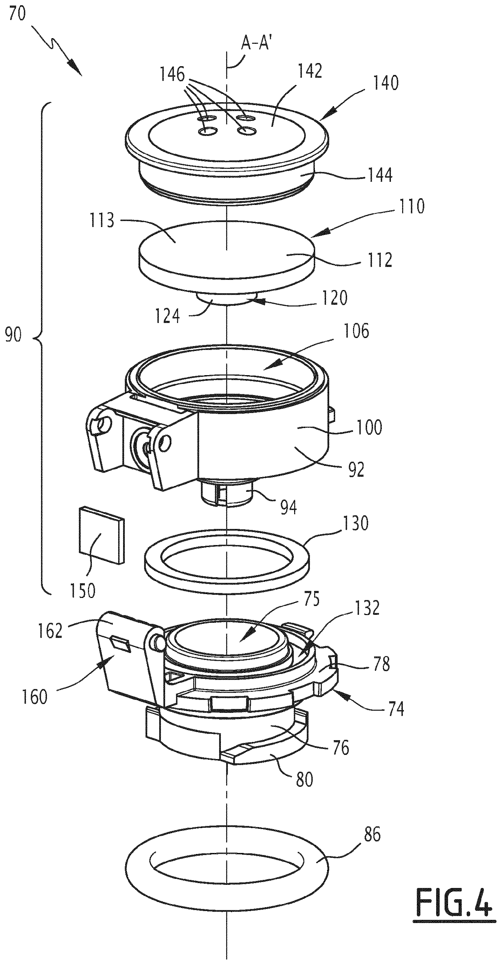

As shown on the example of figure 2, the electrochemical cell 20 comprises one venting device 70. In the following, only one venting device 70 will be described in view of figures 2 to 5. This description applies to every venting device 70 in the case wherein the electrochemical cell 20 comprises several venting devices 70.

For instance, the housing 30 extends along a longitudinal axis L between a first longitudinal wall 32 and a second longitudinal wall 33. The housing 30 further extends along a transverse axis T, substantially perpendicular to the longitudinal axis L, between a first transverse wall 34 and a second transversal wall 35. The housing 30 further extends along a vertical axis V, substantially perpendicular to the longitudinal axis L and to the transversal axis T, between a first vertical wall (not shown) and a second vertical wall (not shown).

As shown on the example of figure 2, the housing 30, in particular the second longitudinal wall 33, bears the at least one venting device 70 and the terminals 22

For instance, the housing 30 comprises a longitudinal dimension LD, measured between the first and second longitudinal wall 32, 33 along the longitudinal axis L, comprised between 80 mm and 100 mm, in particular between 83 mm and 89 mm, for example substantially equal to 86 mm.

The housing 30 defines a cavity 38.

In particular, the cavity 38 is delimited by the first and second longitudinal walls 32, 33, the first and second transversal walls 34, 35 as well as the first and second vertical walls.

The electrochemical bundle 39 is arranged within the cavity 38 and comprises at least one electrochemical assembly 42.

Each electrochemical assembly 42 comprises a positive electrode 40, a negative electrode 50 and at least one separator 54 interposed between the positive electrode 40 and the negative electrode 50.

For example, the electrodes 40, 50 are of the pocket type. Notably, each electrode 40, 50 comprises an assembly of several adjacent pockets joined together to form an electrode base. Each pocket comprises two assembled C-shaped profiles having through apertures and a briquette of active material positioned between the two profiles. Both profiles are advantageously made of metal, for example steel. The pockets extends parallel to a common axis, which is for example substantially perpendicular to the longitudinal axis L. The common axis is for example vertical or horizontal. The pockets are arranged adjacent to each other. Adjacent pockets are connected to one another along opposed side edges of the pockets, parallel to the common axis, for example by a side flank.

For example, the positive electrode 40 of each electrochemical assembly 42 is electrically connected to the first terminal 22A. Advantageously, the positive electrode 40 comprises a nickel-based hydroxide (Ni(OH)₂) as active material.

For example, the negative electrode 50 of each electrochemical assembly 42 is electrically connected to the second terminal 22B. Advantageously, the negative electrode 50 comprises metal hydride in the case of a nickel-metal hydride cell. In particular, the negative electrode 50 comprises cadmium in the case of a nickel-cadmium cell.

Each electrochemical assembly 42 is at least partially immersed in the electrolyte 60. In particular, the positive electrode 40 and the negative electrode 50 of each electrochemical assembly 42 are at least partially immersed in the electrolyte 60.

Preferably, each electrochemical assembly 42 is totally immersed in the electrolyte 60. In particular, the positive electrode 40 and the negative electrode 50 of each electrochemical assembly 42 are totally immersed in the electrolyte 60.

The electrolyte 60 is arranged within the cavity 38.

The electrolyte 60 is for example an alkaline aqueous solution, notably comprising at least one hydroxide. For example, the at least one hydroxide is potassium hydroxide KOH or sodium hydroxide NaOH or lithium hydroxide LiOH. For example, the concentration of hydroxide is greater than 1 mol/L.

The electrolyte 60 further comprises water. During charging of the cell, water is dissociated into oxygen and hydrogen gas. For instance, said oxygen and hydrogen gas is saturated with electrolyte fluids in the form of an aerosol. Said electrolyte aerosol comprises salts such as potassium, sodium or lithium.

For instance, the cavity 38 further comprises a foam suppressant agent, in particular in liquid form. The foam suppressant agent reduces the formation of electrolyte aerosol.

As shown on the example of figure 2, the free surface, in particular the entire free surface, of the electrolyte 60 is formed by a continuous layer 62 of the foam suppressant agent. Thanks to this feature, the electrolyte 60 contained within the cavity 38 is separated from the volume of air contained within the cavity 38. This feature further reduces the formation of electrolyte aerosol.

For instance, the foam suppressant agent comprises an acid and/or an ester, for example a polyhydric alcohol phosphate ester.

In particular, the foam suppressant agent is phosphoric acid, 2-ethylhexyl ester or ethoxylated phosphate ester or 2-ethylhexanol polyethylene glycol ether phosphate.

For example, the foam suppressant agent is Zelec^{®} A081, Phospholan^{®} PE169 and/or ROKAfos^{®} 385.

The venting device 70 is designed to allow gas generated within the cavity 38, in particular oxygen and hydrogen gas along with electrolyte fluids in the form of aerosol, to escape the cavity 38.

In particular, the venting device 70 connects the cavity 38 and the atmosphere surrounding the electrochemical cell 20.

In particular, the venting device 70 is designed to allow gas generated within the cavity 38 to escape outside of the cavity 38 through a flame arrestor element 110.

The venting device 70 is mounted onto the housing 30.

As shown on the example of figure 2, the venting device 70 is mounted onto the second longitudinal wall 33 of the housing 30.

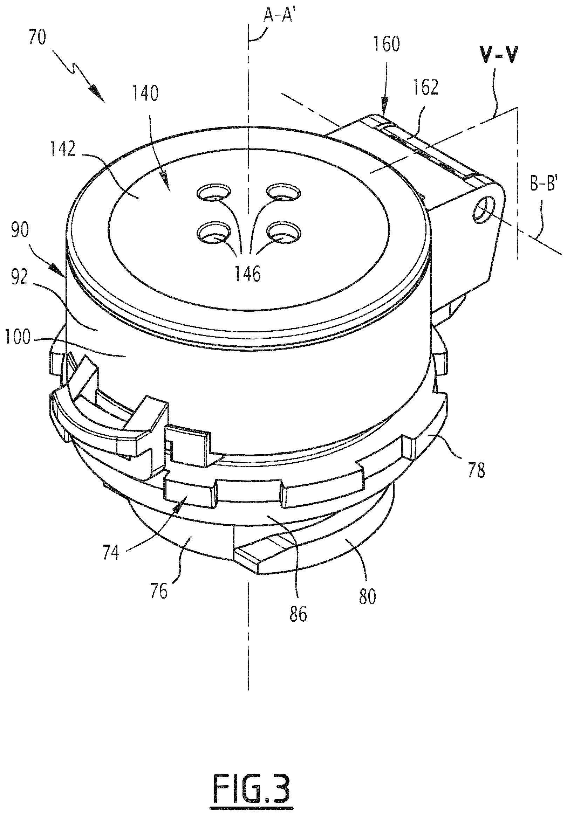

As shown on figures 3 to 5, the venting device 70 comprises a base 74 and a covering piece 90.

Advantageously, the venting device 70 further comprises a first sealing member 86.

Advantageously again, the venting device 70 further comprises a connection mechanism 160 configured for permanently connecting the covering piece 90 to the base 74 and configured for allowing movement of the covering piece 90 between a covering position and an uncovering position, which will be further detailed below.

The base 74 is mounted onto the housing 30, in particular onto the second longitudinal wall 33 of the housing 30, and delimits a through-hole 75 in fluidic communication with the cavity 38.

In particular, the base 74 comprises a cylindrical wall 76 extending through a hole 31 of the housing 30, in particular of the second longitudinal wall 33.

The cylindrical wall 76 at least partially defines a venting pathway 72, which extends according to a venting axis A-A'.

The base 74 further comprises a first 78 and a second 80 flange extending respectively outside of and inside the cavity 38. The first and second flanges 78, 80 are arranged to cooperate with the housing 30, in particular with the second longitudinal wall 33 to keep the cylindrical wall 76 in position with regards to the housing 30, in particular within the hole 31.

The first sealing member 86 is arranged between the base 74 and the housing 30. In particular, the first sealing member 86 is arranged between the first flange 78 and the housing 30, notably between the first flange 78 and the second longitudinal wall 33. For instance, the first sealing member 86 is a sealing ring arranged around the base 74, in particular around the cylindrical wall 76.

The covering piece 90 is permanently connected to the base 74 and is movable between the covering position (shown on figures 2 to 5) in which the covering piece 90 covers the through-hole 75 and the uncovering position (not shown) in which the covering piece 90 uncovers the through-hole 75.

Advantageously, the covering piece 90 is rotatably movable, in particular around an articulation axis B-B', between the covering position and the uncovering position around an axis of a hinge 162 of the connection mechanism 160.

The covering piece 90 comprises a main body 92, the flame arrestor element 110 and a pressure control element 120.

Advantageously, the covering piece 90 further comprises a second sealing member 130 and a cap 140.

Advantageously again, the covering piece 90 further comprises a degassing valve 150.

In particular, the main body 92, the flame arrestor element 110 and the pressure control element 120, advantageously with the cap 140, move together between the covering position and the uncovering position. Thanks to this feature, direct access to the cavity 38, in particular via the through-hole 75, is possible simply by passing the covering piece 90 in the uncovering position in a single opening operation. Furthermore, the main body 92, the flame arrestor element 110 and the pressure control element 120, if applicable with the cap 140, being attached to one another makes it possible to prevent any risk of losing a component of the covering piece 90 when the covering piece is moved into the uncovering position. In particular, this makes it possible to prevent any risk of losing the pressure control element 120 because the pressure control element 120 is attached to the main body 92, as described more in details below.

The main body 92 delimits at least partially the venting pathway 72, which is in fluidic communication with the through-hole 75 when the covering piece 90 is in the covering position.

Advantageously, the main body 92 further comprises an inner cylindrical skirt 94.

Advantageously again, the main body 92 further comprises an outer cylindrical skirt 100 and a radial flange 102 radially connecting the outer cylindrical skirt 100 and the inner cylindrical skirt 94.

The inner cylindrical skirt 94 delimits at least a portion of the venting pathway 72. In other terms, the inner cylindrical skirt 94 delimits a tubular passage 95 which is a part of the venting pathway 72. The gases generated within the cavity 38 and escaping the cavity 38 have to pass within the tubular passage 95 to get away from the cavity 38.

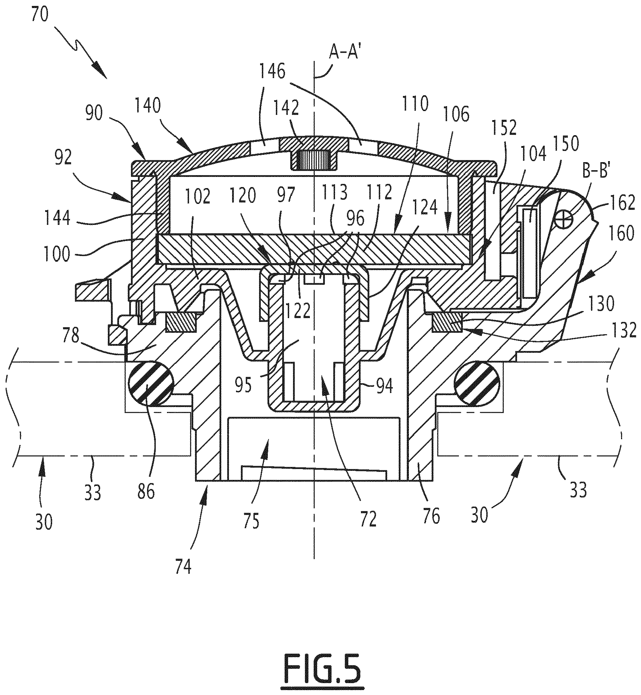

Advantageously, as shown on figure 5, the inner cylindrical skirt 94 comprises at least one radial opening 96. For instance, the at least one radial opening 96 is arranged at a longitudinal edge 97 of the inner cylindrical skirt 94, in particular at the longitudinal edge 97 which is closest to the flame arrestor element 110. The at least one radial opening 96 is designed to make for a passage for the gases escaping the cavity, as will be further detailed below.

Advantageously, the inner cylindrical skirt 94 comprises a plurality of radial opening 96 angularly regularly spaced on the longitudinal edge 97 with respect to the axis of the inner cylindrical skirt 94.

The outer cylindrical skirt 100 radially extends around the inner cylindrical skirt 94.

The radial flange 102 bears against the base 74 when the covering piece 90 is in the covering position, as shown on figures 3 and 5.

The outer cylindrical skirt 100 and the radial flange 102 define a support 104 for the flame arrestor element 110.

The outer cylindrical skirt 100, the radial flange 102 and the cap 140 define a reception space 106 wherein the flame arrestor element 110 is arranged.

In the covering position, the outer cylindrical skirt 100 is arranged facing the cylindrical wall 76 of the base 74. In the covering position, the outer cylindrical skirt 100 and the cylindrical wall 76 extend along the venting axis A-A'.

In the uncovering position, the outer cylindrical skirt 100 is arranged away from the cylindrical wall 76 of the base 74.

As shown on figure 5, the venting pathway 72 is for example delimited by the base 74, in particular by the cylindrical wall 76 of the base, the inner cylindrical skirt 94 of the main body 92, the radial flange 102 of the main body 92, the outer cylindrical skirt 100 of the main body 92 and optionally at least one venting hole 146 of the cap 140.

The venting pathway 72 extends from the cavity 38 to the outside of the electrochemical cell 20.

In the present application, the term "upstream" means closer to the cavity 38 relatively to the venting pathway 72 and the term "downstream" means further away from the cavity 38 relatively to the venting pathway 72.

In the following, only one flame arrestor element 110 is described. The description also applies in the case wherein the covering piece 90 comprises several flame arrestor elements 110.

The flame arrestor element 110 is configured to prevent the propagation of flames from within the cavity 38 to the outside of the cavity 38.

The flame arrestor element 110 is further configured to let gas generated within the cavity 38 flow through it.

For instance, the flame arrestor element 110 has pores with an average pore size between 50 µm and 100 µm.

The flame arrestor element 110 is mounted on the main body 92 of the covering piece 90, in particular downstream of the pressure control element 120.

Advantageously, the flame arrestor element 110 is arranged within the reception space 106.

For instance, the flame arrestor element 110 comprises a body 112.

Advantageously, the flame arrestor element 110 presents a disc shape extending in a plane P substantially perpendicular to the venting axis A-A' within the venting pathway 72.

As shown on the example of figure 5, the flame arrestor element 110 is kept in position within the reception space 106 by cooperating with the outer cylindrical skirt 100, the radial flange 102 and the cap 140.

The flame arrestor element 110 is arranged across the venting pathway 72.

In particular, the flame arrestor element 110 covers the entire cross section of the venting pathway 72 portion delimited by the outer cylindrical skirt 100.

For instance, the flame arrestor element 110, in particular its body 112, is made up of polypropylene or polyethylene. Since, polypropylene and polyethylene are hydrophobic materials, this feature makes it possible to reduce the amount of aerosol that passes through the flame arrestor element 110.

Advantageously, the flame arrestor element 110 further comprises a surface tension reducing agent.

For example, the surface tension reducing agent is hydrophobic.

For example, the surface tension reducing agent is a silicon oil, such as polydimethylsiloxane, or a paraffinic oil.

According to an example, the surface tension reducing agent is contained within the body 112 of the flame arrestor element 110. In other terms, the surface tension reducing agent is part of the material making up the body 112.

According to a variant, the surface tension reducing agent is coated onto an external surface 113 of the body 112.

Advantageously, the mass ratio between the surface tension reducing agent and the polypropylene or the polyethylene is greater than 10%.

The pressure control element 120 is mounted on the main body 92, in particular upstream of the flame arrestor element 110.

The pressure control element 120 is designed to plug the venting pathway 72 when the gas pressure, that is the gas pressure within the cavity 38, is lower than a first gas pressure threshold and to allow the passage of the gas through the venting pathway 72 when the gas pressure, that is the gas pressure within the cavity 38, is greater than the first gas pressure threshold.

By plugging the venting pathway 72 when the gas pressure is lower than the first gas pressure threshold, recombination of hydrogen and oxygen into water is promoted. By allowing the passage of the gas through the venting pathway 72 when the gas pressure is greater than the first gas pressure threshold, the pressure control element 120 makes it possible to release gas outside of the cavity 38 to prevent overpressure within the cavity.

For instance, the pressure control element 120 covers the longitudinal edge 97 of the inner cylindrical skirt 94.

In particular, the pressure control element 120 is designed to cover the at least one radial opening 96 when the gas pressure, that is the gas pressure within the cavity 38, is lower than the first gas pressure threshold and is able to uncover the at least one radial opening 96 when the gas pressure, that is the gas pressure within the cavity 38, is greater than the first gas pressure threshold. When the pressure control element 120 covers the at least one radial opening, no gas is able to escape the cavity 38 through the at least one radial opening 96, toward the venting hole 146 of the cap 140. When the pressure control element 120 uncovers the at least one radial opening 96, the gas is able to escape the cavity 38 through the at least one radial opening 96, toward the venting hole 146 of the cap 140.

Advantageously, the pressure control element 120 is an elastically deformable cap covering the longitudinal edge 97 of the inner cylindrical skirt 94, as shown on the example of figure 5.

As shown on the example of figure 5, the elastically deformable cap comprises a main portion 122 extending substantially perpendicularly to the axis of the inner cylindrical skirt 94 and across the whole cross-section of the tubular passage 95. For instance, also in reference to figure 5, the elastically deformable cap comprises a skirt 124 extending substantially parallel to the axis of the inner cylindrical skirt 94 and cooperating with an outer surface of the inner cylindrical skirt 94. As shown, the main portion 122 and the skirt 124 of the elastically deformable cap cover the at least one radial opening 96.

For instance, the elastically deformable cap is made up of a material having a hardness between 30 shore A and 80 shore A.

For example, the elastically deformable cap is made up of rubber.

By "elastically deformable", it is meant that the cap is able to deform temporarily by a force and then return to its original shape at rest. For instance, at rest, the elastically deformable cap covers the at least one radial opening 96 and when the gas pressure within the cavity 38 is greater than the first gas pressure threshold, the elastically deformable cap is temporarily deformed by the pressure force to uncover the at least one radial opening 96. When enough gas has escaped the cavity 38 through the at least one radial opening 96, the elastically deformable cap returns to its original shape.

In a variant, the pressure control element 120 is another plugging element such as a metallic ball or a spring-loaded plug.

Advantageously, the first gas pressure threshold is between 20 mbar and 100 mbar. The first gas pressure threshold corresponds to an over-pressure relative to the atmospheric pressure.

The second sealing member 130 is mounted onto the base 74 of the venting device 70, in particular within an annular recess 132 of base 74, extending around the cylindrical wall 76. The second sealing member 130 is designed to cooperate with the main body 92 of the covering piece 90, in particular with the radial flange 102, when the covering piece 90 is in the covering position.

For instance, the second sealing member 130 is a sealing ring.

The cap 140 is mounted on the main body 92, in particular downstream of the flame arrestor element 110.

The cap 140 covers the flame arrestor element 110.

In particular, the cap 140 is configured to cooperate with the main body 92 to at least partially cover the reception space 106. The cap 140 is movable between a mounted configuration (shown on figures 3 and 5) in which the cap 140 covers the reception space 106 and an unmounted configuration (not shown) in which the cap 140 is arranged away from the main body 92.

For example, in the mounted configuration, the cap 140 is kept in position onto the main body 92 by snap-fitting cooperation with the main body 92, in particular with the outer cylindrical skirt 100.

In the unmounted configuration, the flame arrestor element 110 can be replaced by another flame arrestor element 110, in particular without having to put the covering piece 90 in the uncovering position.

The cap 140 comprises a main wall 142 and a cylindrical skirt 144 extending substantially perpendicularly to the main wall 142.

In the mounted configuration, the cap 140, in particular the main wall 142, delimits the reception space 106, in conjunction with the outer cylindrical skirt 100 and the radial flange 102.

For instance, as shown on figure 5, the cylindrical skirt 144 of the cap 140 extends from the main wall 142 within the reception space 106 and is adapted to bear against the flame arrestor element 110. The flame arrestor element 110 is maintained in position by cooperation with the outer cylindrical skirt 100 of the main body 92, the radial flange 102 of the main body 92 and the cylindrical skirt 144 of the cap 140.

Advantageously, as shown on figures 3 to 5, the cap 140 comprises at least one venting hole 146, in particular a plurality of venting holes 146, arranged within the main wall 142 and adapted to allow the escape of gas outside of the venting device 70, in particular outside of the reception space 106.

The degassing valve 150 is designed to allow gas generated within the cavity 38 to escape the cavity 38 if the covering piece 90 is in the covering position and if the gas pressure, that is the gas pressure within the cavity 38, is greater than a second gas pressure threshold.

The second gas pressure threshold is greater than the first gas pressure threshold. For instance, the second gas pressure threshold is between 300 mbar and 600 mbar.

The second gas pressure threshold correspond to an over-pressure relative to the atmospheric pressure.

Advantageously, the degassing valve 150 comprises a degassing pathway 152 delimited by the main body 92 of the covering piece 90.

For example, the degassing valve 150 further comprises at least one evacuation channel (not shown) fluidically connected to the cavity 38.

The connection mechanism 160 comprises the hinge 162.

The hinge 162 connects the main body 92 of the covering piece 90 and the base 74.

The hinge 162 presents an articulation axis B-B' extending substantially perpendicularly to the venting axis A-A'.

Thanks to the invention, a higher pressure is allowed within the cavity 38. By reaching such a higher pressure, oxygen and hydrogen gases within the cavity 38 are more likely to recombine into water. This makes the need for refilling the cavity 38 with water less frequent.

Furthermore, the pressure control element 120 being a part of the covering piece 90 makes it easier for an operator to refill the cavity 38 with water if needed. In fact, when there is a need for refilling the cavity 38 with water, the operator simply puts the covering piece 90 in the uncovering position. This directly gives the operator access to the cavity 38 without having, for instance, to dismount any specific part, in particular without having to dismount the pressure control element 120.

## Claims

1. Venting device (70) for an electrochemical cell (20), designed to allow gas generated within a cavity (38) defined by a housing (30) of the electrochemical cell (20) to escape the cavity (38), comprising:
- a base (74) designed to be mounted onto the housing (30) and delimiting a through-hole (75) designed to be in fluidic communication with the cavity (38);
- a covering piece (90) permanently connected to the base (74) and movable between a covering position in which the covering piece (90) covers the through-hole (75) and an uncovering position in which the covering piece (90) uncovers the through-hole (75);
the covering piece (90) comprising:
- a main body (92) delimiting a venting pathway (72) in fluidic communication with the through-hole (75) when the covering piece (90) is in the covering position;
- a flame arrestor element (110) mounted on the main body (92) and arranged across the venting pathway (72);
**characterized in that** the covering piece (90) further comprises a pressure control element (120) mounted on the main body (92), designed to plug the venting pathway (72) when the gas pressure is lower than a first gas pressure threshold and to allow the passage of the gas through the venting pathway (72) when the gas pressure is greater than the first gas pressure threshold.

2. Venting device (70) according to claim 1, wherein the main body (92) comprises an inner cylindrical skirt (94) delimiting at least a portion of the venting pathway (72), the pressure control element (120) covering a longitudinal edge (97) of the inner cylindrical skirt (94).

3. Venting device (70) according to claim 2, wherein the inner cylindrical skirt (94) comprises at least one radial opening (96), the pressure control element (120) being designed to cover the at least one radial opening (96) when the gas pressure is lower than the first gas pressure threshold and being able to uncover the at least one radial opening (96) when the gas pressure is greater than the first gas pressure threshold.

4. Venting device (70) according to claim 2 or 3, wherein the main body (92) further comprises an outer cylindrical skirt (100) and a radial flange (102) radially connecting the outer cylindrical skirt (100) and the inner cylindrical skirt (94), the radial flange (102) bearing against the base (74) when the covering piece (90) is in the covering position.

5. Venting device according to claim 4, wherein the outer cylindrical skirt (100) and the radial flange (102) define a support for the flame arrestor element (110).

6. Venting device (70) according to any one of the preceding claims, wherein the pressure control element (120) is an elastically deformable cap.

7. Venting device (70) according to claim 6, wherein the elastically deformable cap is made up of a material having a hardness between 30 shore A and 80 shore A, said material being for example rubber.

8. Venting device (70) according to any one of the preceding claims, wherein the first gas pressure threshold is between 20 mbar and 100 mbar.

9. Venting device (70) according to any one of the preceding claims, wherein the covering piece (90) further comprises a degassing valve (150), the degassing valve (150) being designed to allow gas generated within the cavity (38) to escape the cavity (38) if the covering piece (90) is in the covering position and if the gas pressure is greater than a second gas pressure threshold, the second gas pressure threshold being greater than the first gas pressure threshold.

10. Venting device (70) according to claim 9, wherein the second gas pressure threshold is between 300 mbar and 600 mbar.

11. Venting device (70) according to any one of the preceding claims, wherein the covering piece (90) further comprises a cap (140) mounted on the main body (92) and covering the flame arrestor element (110), the cap (140) delimiting at least one venting hole (146).

12. Venting device (70) according to any one of the preceding claims, further comprising a connection mechanism (160) configured for permanently connecting the covering piece (90) to the base (74) and configured for allowing movement of the covering piece (90) between the covering position and the uncovering position.

13. Venting device (70) according to claim 12, wherein the connection mechanism (160) comprises a hinge (162), the covering piece (90) being rotatably movable between the covering position and the uncovering position around an articulation axis (B-B') of the hinge (162).

14. Electrochemical cell (20) comprising:
- a housing (30) defining a cavity (38);
- an electrochemical bundle (39) arranged within the cavity (38) and comprising at least one electrochemical assembly (42) comprising a positive electrode (40), a negative electrode (50) and a separator (54) interposed between the positive electrode (40) and the negative electrode (50);
- a volume of electrolyte (60) arranged within the cavity (38), in which the at least one electrochemical assembly (42) is at least partially immersed;
- at least a venting device (70) according to any one of the preceding claims, being designed to allow gas generated within the cavity (38) to escape the cavity (38),
the base (74) of the at least one venting device (70) being mounted onto the housing (30) and delimiting a through-hole (75) in fluidic communication with the cavity (38),
the pressure control element (120) of the at least one venting device (70) plugging the venting pathway (72) when the gas pressure is lower than the first gas pressure threshold and allowing the passage of gas through the venting pathway (72) when the gas pressure is greater than the first gas pressure threshold.

15. Battery module (10) comprising at least one electrochemical cell (20) according to claim 14.
